# FASCICULE DE BREVET EUROPEEN

(11) **EP 4 065 949 B1**
(45) Date de publication et mention de la délivrance du brevet: **21.01.2026**
(21) Numéro de dépôt: 20821351.2
(22) Date de dépôt: 23.11.2020
(51) Int. Cl.: G01M 17/02, G01N 21/88, G01N 21/95, G01B 11/25, G01B 11/245

(54) **SYSTEME D'EVALUATION DE L'ETAT DE LA SURFACE D'UN PNEUMATIQUE**
SYSTEM ZUR BEURTEILUNG DES ZUSTANDES DER OBERFLÄCHE EINES REIFENS
SYSTEM FOR EVALUATING THE STATE OF THE SURFACE OF A TYRE

(30) Priorité: 27.11.2019 FR 1913285
(43) Date de publication de la demande: 05.10.2022
(73) Titulaire: COMPAGNIE GENERALE DES ETABLISSEMENTS MICHELIN, 63040 Clermont-Ferrand (FR)
(72) Inventeur: MOUROUGAYA, François, 63040 CLERMONT-FERRAND CEDEX 9 (FR); ROUDEL, Nicolas, 63040 CLERMONT-FERRAND CEDEX 9 (FR); HECK, Florian, 63040 CLERMONT-FERRAND CEDEX 9 (FR)
(74) Mandataire: M.F.P. Michelin
(86) Numéro de dépôt international: PCT/FR2020/052147
(87) Numéro de publication internationale: WO 2021/105597

(56) Documents cités:
- EP-A1- 3 060 899
- EP-A1- 3 391 011
- WO-A1-2014/096452
- WO-A1-2018/150256
- FR-A1- 3 011 079
- US-A- 4 506 981
- US-A1- 2001 040 682
- US-A1- 2005 264 796
- US-A1- 2019 353 560
- SIEGEL JOSHUA E ET AL: "Automotive Diagnostics as a Service: An Artificially Intelligent Mobile Application for Tire Condition Assessment", 21 June 2018, ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 172 - 184, ISBN: 978-3-319-10403-4, XP047494592
- TADA HIROTARO ET AL: "Defect Classification on Automobile Tire Inner Surfaces using Convolutional Neural Networks", 2017 INTERNATIONAL CONFERENCE ON COMPUTING, COMMUNICATION, CONTROL AND AUTOMATION (ICCUBEA), IEEE, 17 August 2017 (2017-08-17), pages 1 - 6, XP033404265, DOI: 10.1109/ICCUBEA.2017.8463768

## Description

L'invention se situe dans le domaine du contrôle visuel des pneumatiques. De manière plus précise, l'invention concerne un système permettant l'évaluation de l'état d'un pneumatique, par l'acquisition d'une image visuelle dudit pneumatique. Les pneumatiques destinés à équiper les véhicules roulants ont généralement une couleur noire en raison de l'utilisation du carbone pour renforcer les mélanges élastomériques à base desquels sont réalisés lesdits pneumatiques.

Ainsi, il s'avère particulièrement délicat d'interpréter les images acquises à l'aide de capteurs sensibles à la réflexion de la lumière sur la surface du pneumatique. Les effets lumineux engendrés par le relief du pneumatique, par des taches de graisse, les taches diverses, les différences de teintes de noir, ou encore par des décolorations localisées, peuvent être aisément confondus lorsque l'on analyse sans discernement l'image brute fournie par une caméra.

Par conséquent, la capacité à détecter correctement des défauts de surface tels que les tâches, griffures, manques de matière ou excès de matière, ou bien encore la présence ou absence d'objets en relief ou en creux dépend fortement de l'éclairage appliqué à la surface, qui aura pour conséquence de faire ressortir plus ou moins bien les différents défauts, notamment selon la distance et l'angle d'incidence de l'éclairage.

Différentes solutions ont été proposées pour permettre une détection correcte de ces défauts. Ainsi, il existe dans le commerce des systèmes d'acquisition s'appuyant sur le principe de la stéréophotométrie, permettant de renforcer la visibilité des structures de surface. On rappelle que la stéréophotométrie est une technique consistant à prendre N photographes d'une même surface soumis à N conditions d'éclairages différentes.

L'utilisation d'une telle technique est, par exemple, décrite dans le document EP 2 078 955 B1. Le document FR 3 011 079 A1 décrit également un système optique permettant de contrôler la qualité des pneumatiques.

On a toutefois constaté que la mise en œuvre de cette solution impliquait l'utilisation de plusieurs capteurs dont l'encombrement rend difficile leur intégration. Or, on souhaite généralement pouvoir installer ces systèmes directement à la sortie des lignes de production de pneumatiques, ce qui impose un certain nombre de contraintes en termes d'encombrement. En outre, la technique de stéréophotométrie nécessite une connaissance de la position des éclairages, et donc une mise en position relative éclairage/pneumatique relativement précise, au risque de fausser l'acquisition et l'analyse.

L'objet de l'invention vise donc à remédier à l'ensemble de ces inconvénients en proposant un système complet d'évaluation de la surface d'un pneumatique permettant une détection de bonne qualité tout en représentant un compromis acceptable en encombrement.

Ainsi, la présente invention concerne un système d'évaluation de la surface d'un pneumatique comprenant :
- une zone d'entrée du pneumatique dans le système, une zone de capture, et une zone de sortie, distincte de la zone d'entrée,
- des moyens de mise en mouvement et de maintien en position d'un pneumatique,
- des moyens d'éclairage du pneumatique permettant l'éclairage d'un flanc du pneumatique et du sommet d'un pneumatique dans la zone de capture,
- des moyens d'acquisition d'une image visuelle du pneumatique dans la zone de capture,
- des moyens de traitement de l'image acquise,
au moins un moyen d'acquisition étant installé sur un axe mobile par rapport au pneumatique installé dans la zone de capture, et des moyens d'écartement des bourrelets du pneumatique comportant des galets mobiles en translation sur deux axes verticaux, les deux axes verticaux étant mobiles en translation sur un axe horizontal.

La présence d'une zone d'entrée du pneumatique distincte de la zone de sortie permet de faire entrer un pneumatique dans le système pendant que le pneumatique précédemment évalué est en train de sortir. Cela permet donc de gagner du temps de cycle, et de faciliter la gestion logistique autour du système.

La présence d'un axe mobile portant un moyen d'acquisition permet d'adapter le système à toute dimension de pneumatique, puisque les moyens d'acquisition peuvent être positionnés différemment selon la largeur du pneumatique.

Dans un mode de réalisation avantageux, l'invention vise un système permettant également l'inspection visuelle de l'intérieur du pneumatique en utilisant les mêmes moyens, ou des moyens similaires. Ainsi, un système qui sera détaillé à l'aide des figures montrera une acquisition totale du pneumatique.

Dans un exemple de réalisation, les moyens de mise en mouvement et de maintien en position d'un pneumatique comprennent un ou plusieurs des moyens parmi :
- des moyens de centrage,
- des moyens de mise en rotation,
- des moyens de blocage du pneumatique,
- des moyens de mise en mouvement linéaire entre la zone d'entrée et de sortie, via la zone de capture.

Les moyens de mise en mouvement linéaire permettent de rendre le dispositif traversant, ce qui signifie qu'il est facilement intégrable à une ligne de transitique de pneumatiques, par exemple dans une usine de production de pneumatiques.

Les moyens de centrage permettent de garantir que la prise de vue porte sur l'ensemble du pneumatique. Avantageusement, ces moyens de centrage peuvent être des moyens de centrage électrique, par exemple à l'aide de rouleaux centreurs.

Le système comprend en outre des moyens d'écartement des bourrelets du pneumatique. En effet, on a constaté que, pour les pneumatiques d'une certaine dimension, par exemple les pneumatiques de type Poids Lourd, les bourrelets représentaient une gêne pour l'insertion des moyens d'acquisition. Il apparaît donc utile de prévoir des moyens permettant d'écarter ces bourrelets avant l'insertion des moyens d'acquisition et/ou d'éclairage. Ces moyens d'écartement permettent un maintien en position « ouverte » des bourrelets pendant toute la période d'acquisition, et un relâchement des bourrelets avant la sortie du pneumatique.

Dans un mode de réalisation préférentiel, les moyens d'acquisition comportent une ou plusieurs caméras linéaires, et les moyens d'éclairage sont disposés en dehors du champ d'acquisition de la ou des caméras. On précise ici qu'une caméra linéaire est une caméra dont le capteur prend la forme d'une ligne de pixels.

Un exemple plus précis sera décrit ultérieurement à l'aide de figures.

Dans un mode de réalisation préférentielle, un système selon l'invention comprend en outre des moyens de mise en mouvement des moyens d'acquisition. Ces moyens permettent de faire descendre les caméras au niveau du pneumatique installé dans la zone de capture, et de les remonter ensuite pour permettre l'évacuation du pneumatique. Le détail de ces différentes opérations sera ultérieurement décrit à l'aide d'un chronogramme.

De manière préférentielle également, le système comporte un demi-miroir, installé de manière à réfléchir l'image d'une partie du pneumatique. Ainsi, deux zones du pneumatique orientées différemment peuvent se retrouver dans le champ d'une même caméra linéaire. Un tel dispositif permet de gagner en encombrement et donc en coût.

Dans un mode de réalisation avantageux, les moyens d'éclairage comportent des sources lumineuses individuelles recouvertes d'un matériau diffusant.

Un tel matériau permet d'améliorer l'homogénéité de l'éclairage et de diminuer les potentiels effets de brillance de la surface du pneumatique. En effet, l'uniformité de l'éclairage est particulièrement importante dans le cas d'un système d'acquisition linéaire.

Dans un mode de réalisation avantageux, les moyens d'éclairage d'un flanc du pneumatique comportent des sources lumineuses individuelles disposées selon une courbe correspondant approximativement à la courbure d'un flanc de pneumatique.

Les dispositifs individuels sont par exemple des diodes électroluminescentes.

Dans un mode de réalisation, les moyens de traitement de l'image acquise comportent des moyens d'intelligence artificielle.

De manière préférentielle, on utilisera une intelligence artificielle adaptée aux multimodalités multi-résolutions. C'est-à-dire qu'on peut appliquer un même traitement à des images prises suivants différentes modalités, et qui n'ont donc pas nécessairement la même résolution, sans que cela pose de problème. Cela permet de faire l'acquisition de l'image complète du pneumatique en un seul cycle, sans tenir compte des interférences entre les différents capteurs. En outre, l'utilisation de l'intelligence artificielle permet de supprimer l'étape de reconstruction stéréo qui était auparavant nécessaire. Cela permet donc de gagner du temps de cycle.

Dans un mode de réalisation, un système selon l'invention comprend des moyens de mise en position des moyens d'acquisition et/ou d'éclairage.

L'invention concerne également un procédé d'évaluation de la surface d'un pneumatique par un système selon l'invention, le procédé comportant
- une étape d'entrée du pneumatique dans le système d'évaluation,
- une étape de mise en rotation du pneumatique dans la zone de capture du système,
- une étape d'acquisition d'images visuelles du sommet et des flancs du pneumatique,
- une étape d'acquisition d'une image visuelle du pneumatique, pendant une rotation complète d'un pneumatique,
- une étape de sortie du pneumatique du système d'évaluation, dans lequel l'étape d'acquisition d'une image visuelle du pneumatique est effectuée pendant une rotation d'un tour du pneumatique, et en ce que l'étape de sortie du pneumatique est concomitante à une étape d'entrée d'un autre pneumatique dans le système.

Un tel procédé permet de gagner du temps de cycle, puisqu'une partie d'un cycle est effectuée en même temps ou avant même la fin du cycle précédent.

Dans un mode de réalisation avantageux, le procédé comprend une étape d'éclairage des flancs et du sommet du pneumatique. Cette étape d'éclairage sera ultérieurement détaillée à l'aide de figures.

Dans un mode de réalisation avantageux, un procédé selon l'invention comprend en outre une étape d'écartement des bourrelets, préalable à l'étape d'acquisition.

Dans un mode de réalisation avantageux, un procédé selon l'invention comprend en outre une étape de traitement de l'image acquise. Ce traitement peut avoir lieu en parallèle des autres étapes du procédé, puisqu'il ne nécessite pas la présence du pneumatique dans le système d'évaluation.

Le traitement comprend une étape préliminaire de préparation de l'image.

Ainsi, si l'image est acquise par un procédé de stéréophotométrie, il est utile de prévoir une étape de reconstruction stéréo des différences prises de vue. Cette étape est toutefois inutile si les moyens de traitement mettent en oeuvre une intelligence artificielle, comme précédemment décrit.

L'étape préliminaire de préparation de l'image peut également comprendre un découpage en sous-images, qui permet de démarrer le traitement au plus tôt et ainsi de réduire le temps de cycle. Cette étape peut également comprendre une étape de recalage.

Le traitement comprend ensuite une étape d'évaluation de l'état de surface. Cette étape peut faire appel à différents procédés connus d'analyse d'image, tel que le deep-learning ou des traitements d'image traditionnel (filtrage, segmentation ...).

D'autres exemples de réalisation seront décrits à titre non limitatif à l'aide de figures, parmi lesquels :
[Fig 1] La figure 1 représente un schéma de principe de la stéréophotométrie,
[Fig 2] la figure 2 montre un exemple de machine correspondant à un système selon l'invention,
[Fig 3] la figure 3 montre un autre exemple de machine, particulièrement adapté aux pneumatiques de grande taille,
[Fig 4] La figure 4 montre de manière plus précise la position des différentes caméras permettant les prises de vue du pneumatique,
[Fig 5] La figure 5 montre les différentes zones du pneumatique qui doivent être éclairées et acquises,
[Fig 6] La figure 6 montre un chronogramme des grandes étapes d'un procédé selon l'invention.

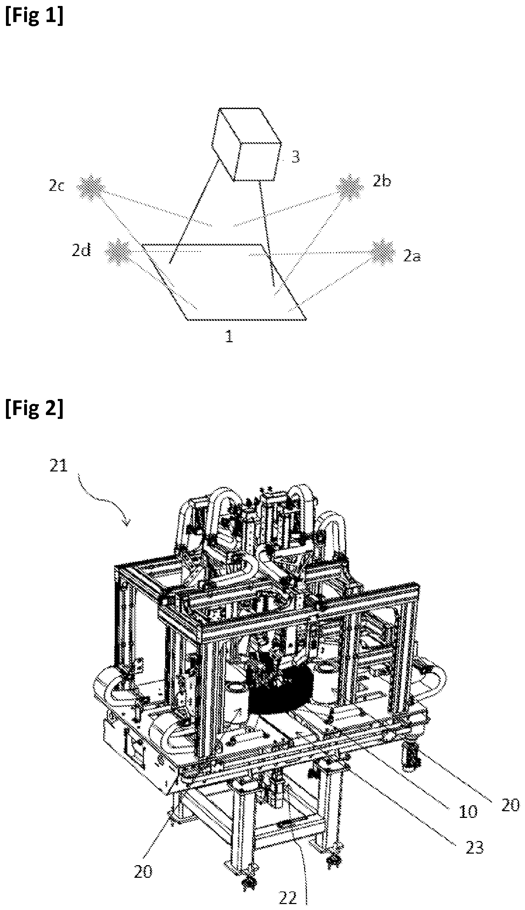

La figure 1 montre une surface 1 à étudier. Cette surface 1 est éclairée par différentes sources lumineuses 2a, 2b, 2c et 2d. On précise ici que les différentes sources lumineuses ne sont pas destinées à être allumées en même temps, mais à tour de rôle, selon un cycle d'éclairage prédéfini. En effet, comme indiqué précédemment le principe de la stéréophotométrie est de faire de multiples acquisitions, également appelées prises de vue, de la surface 1 sous différents éclairages, selon la ou les sources lumineuses allumées lors de la prise de vue. A cet effet, le système de la figure 1 comporte également un système de prise de vue 3.

La figure 2 montre une vue complète d'une machine mise en oeuvre dans un système selon l'invention. Cette machine comprend des moyens de mise en rotation d'un pneumatique 10. Cette machine comprend également des moyens permettant un mouvement linéaire de la zone d'entrée 21 (non visible sur la figure) vers la zone de sortie 22 du pneumatique. Ces moyens comprennent par exemple un tapis d'évacuation 23.

La machine comprend en outre des moyens de centrage, sous la forme de rouleaux verticaux 20 qui viennent serrer le pneu puis l'entraîner. Le mouvement des deux paires est synchronisé par une courroie. A l'entrée du pneu, son diamètre est mesuré approximativement par le télémètre d'entrée et on envoie les rouleaux à cette position de serrage plus un offset permettant de serrer. Quand on approche cette côte, l'approche des rouleaux décélère pour basculer vers une consigne de couple, apportant de la souplesse au centrage et à l'entraînement.

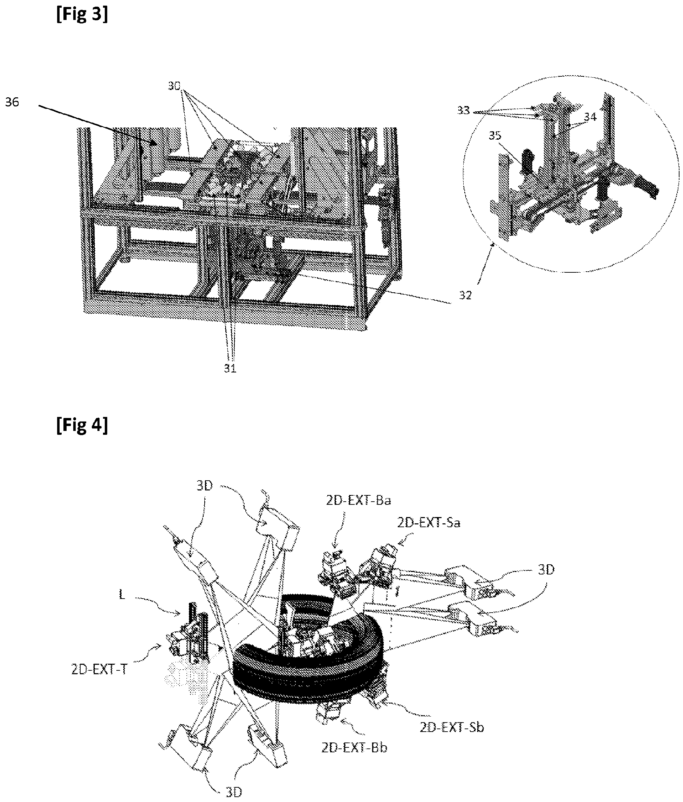

La figure 3 montre un autre exemple de machine, destiné à accueillir un pneumatique pour une phase d'acquisition.

Cette figure 3 permet d'illustrer un autre exemple de réalisation des moyens de mise en mouvement du pneumatique, et également de décrire des moyens d'écartement des bourrelets pour un pneumatique de grande taille.

Les différents moyens d'éclairage et d'acquisition ne sont pas représentés sur cette figure, et ne seront pas décrits. Toutefois, la description de ces moyens, effectuée au vu de la figure 2, s'applique également à une machine telle que montrée en figure 3.

Sur cet exemple, les moyens de mise en rotation d'un pneumatique comportent des rouleaux verticaux 36, dont un seul est montré sur la figure, permettant l'entraînement du pneumatique. Cette rotation est facilitée par la présence de rouleaux horizontaux 31, situés sous le pneumatique lorsque celui-ci est en position.

Cet exemple montre également quatre tapis d'évacuation 30. A la différence de la figure précédente, qui ne montrait qu'un unique tapis, nous avons ici quatre tapis distincts. En effet, afin d'utiliser la machine pour des pneumatiques de grande taille, il est utile de prévoir des moyens 32 d'écartement des bourrelets, qui doivent venir s'insérer au centre du pneumatique.

Il est donc nécessaire de dégager l'espace central, ce qui impose de positionner les tapis d'évacuation sur les côtés latéraux. Il convient alors d'en utiliser plusieurs afin de garantir que l'évacuation se fait de manière parallèle à la direction de sortie de la machine. En outre, le fait d'avoir deux tapis de chaque côté, avec un espacement entre les deux, permet de libérer des tranches complètes du pneumatique pour permettre l'acquisition de la partie inférieure du pneumatique.

Une vue détaillée de ces moyens 32 est présente dans la bulle montrée sur la figure 3. Ces moyens comportent des galets 33 mobiles en translation sur deux axes verticaux 34. Ces axes verticaux sont, quant à eux, mobiles en translation sur un axe horizontal.

Lorsqu'il n'y a pas de pneumatique dans la machine, les axes verticaux se trouvent au centre et les picots sont en position basse, comme montré sur la figure. Lorsque que le pneumatique est positionné, une mesure de l'écart entre bourrelets est réalisée. Si la mesure est inférieure à une certaine valeur prédéterminée, les galets montent jusqu'au point bas du bourrelet supérieur, c'est-à-dire le bourrelet le plus éloigné de la table, et les axes verticaux s'écartent de manière à venir exercer une pression sur le bourrelet, afin de procéder à son écartement à la valeur d'ouverture désirée. Si la mesure est supérieure à cette même valeur prédéterminée, les galets montent jusqu'au point bas du bourrelet supérieur et on exerce une légère pression afin de simplement assurer la planéité des bourrelets lors de la rotation.

L'étape d'acquisition est alors effectuée, et les moyens d'écartement retrouvent ensuite leur position initiale, pour permettre l'évaluation du pneumatique.

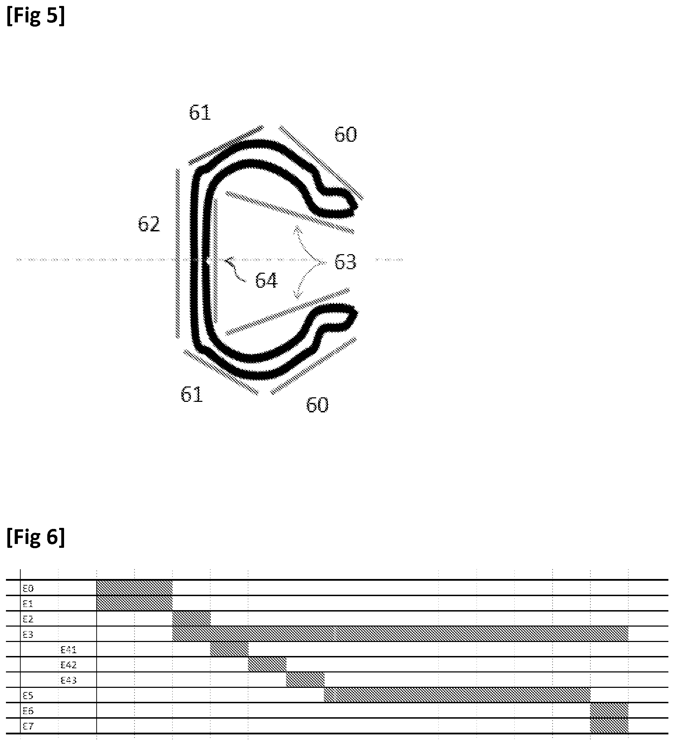

Nous allons maintenant décrire à l'aide des figures 4 et 5 les différentes zones du pneumatique et les caméras qu'il est possible d'utiliser pour effectuer les différentes acquisitions.

Un pneumatique peut être séparé en différentes zones :
- des zones externes, telles que les flancs 60, les épaules 61, et la bande de roulement 62, également appelée sommet,
- des zones internes telles que les côtés internes 63 et la couronne intérieure 64.

Pour faire l'acquisition de ces différentes zones, on utilise à la fois des caméras, également appelées capteurs, en deux dimensions et en trois dimensions, qui sont montrées en figure 4.

Les capteurs deux dimensions sont utilisés à la fois pour l'intérieur et l'extérieur :
- capteur 2D_EXT_T pour l'acquisition de la bande de roulement 62,
- capteur 2D_EXT_S pour l'acquisition des épaules 61,
- capteurs 2D_EXT_B pour l'acquisition des flancs 60.

Le capteur permettant l'acquisition de la couronne intérieure n'est pas visible sur la figure 4.

Les capteurs permettant l'acquisition des côtés internes ne sont pas référencés.

Les capteurs trois dimensions sont utilisés uniquement pour les surfaces externes du pneumatique, et sont notés 3D sur la figure 4. Certaines caméras sont avantageusement dotées de moyens d'éclairage. Ces moyens d'éclairage prennent la forme de barres lumineuses L, chaque barre étant composée d'une ligne de sources lumineuses individuelles, et étant orientée de façon que l'éclairage soit le plus uniforme possible sur la ligne acquise par une caméra linéaire.

Dans un exemple, une caméra porte trois ou quatre barres lumineuses, qui s'allument à tour de rôle selon un cycle prédéterminé. Ainsi, la caméra peut créer, en une seule fois, trois ou quatre images différentes, ce qui permet d'appliquer un principe de stéréophotométrie, déjà décrit.

Dans un exemple de réalisation, les caméras 2D-EXT-Ba et 2D-EXT-Sa situées en dessous du pneumatique sont en position fixe, et le pneumatique vient se positionner correctement par rapport à ces caméras. En revanche, les caméras 2D-EXT-Bb et 2D-EXT-Sb situées au-dessus du pneumatique sont installées sur un axe mobile, afin de pouvoir descendre jusqu'à une position d'acquisition correcte, en fonction de la largeur du pneumatique.

En outre, dans un mode de réalisation, le positionnement des caméras intérieures, permettant l'acquisition des côtés internes et de la couronne intérieure peut être réalisé de manière automatique lors de l'entrée d'un pneumatique dans la zone de capture. A cet effet, un système selon l'invention comporte un télémètre permettant de déterminer la position d'un point significatif du pneumatique, par exemple le point radialement le plus intérieur du pneumatique, à savoir l'extrémité du talon destiné à être en contact avec un siège de jante lors d'un montage du pneumatique.

La détermination de ce point permet un positionnement en hauteur et en rayon des différentes caméras intérieures. Dans un exemple, la caméra destinée à l'acquisition de la couronne intérieure est positionnée à mi-hauteur par rapport à ce point significatif, en partant de l'ordonnée zéro correspondant à la table sur laquelle est positionné le pneumatique dans la zone de capture.

Nous allons maintenant décrire, à l'aide du chronogramme de la figure 6, les différentes étapes d'un procédé selon l'invention, permettant d'atteindre les objectifs de l'invention, à savoir la réalisation d'une inspection visuelle complète dans un temps de cycle le plus court possible.

La première étape E1 consiste en l'entrée d'un pneumatique dans un système selon l'invention. Comme montré sur le chronogramme, cette étape E1 peut être concomitante avec une étape E0 correspondant à la sortie, ou évacuation, du pneumatique précédent.

A l'issue de cette étape E1, une étape E2 consiste à bloquer le pneumatique de manière centrée.

L'étape E3 de mise en rotation du pneumatique démarre au même moment que l'étape de centrage, et durera jusqu'à la fin du cycle d'acquisition.

On arrive ensuite à une macro-étape E4 de mise en position des différents capteurs. Cette macro-étape comprend différentes sous-étapes pour chacun des capteurs. On décrira ici les sous-étapes successives correspondant à un capteur :
- une sous-étape E41 de descente du capteur à vitesse rapide,
- une sous-étape E42 de descente du capteur à vitesse lente.

Ces deux sous-étapes permettent d'atteindre le compromis inhérent à la présente invention, à savoir le compromis vitesse / qualité. Ainsi, on commence par descendre rapidement le capteur jusqu'à proximité de la zone où il doit se situer, puis on passe en vitesse lente pour ajuster précisément la position.

Une sous-étape E43 de mise au diamètre du capteur, c'est-à-dire non plus un mouvement vertical comme dans les sous-étapes E41 et E42, mais un mouvement axial pour s'adapter au diamètre du pneumatique à évaluer.

Ces trois sous-étapes sont les mêmes pour tous les capteurs intérieurs.

En revanche, les capteurs extérieurs, dont la mise en position est plus aisée, peuvent être descendus à vitesse constante.

En outre, comme indiqué précédemment, certains capteurs ne bougent pas, puisqu'ils sont en position fixe dans le système d'évaluation.

On passe ensuite à l'étape E5 d'acquisition en elle-même, également appelée contrôle.

On a ensuite une étape E6 correspondant à la remontrée des différents capteurs. En parallèle de cette étape E6 se trouve une étape E7 de libération des moyens de centrage.

L'étape de sortie du pneumatique n'est pas décrite en fin de chronogramme car elle l'a été en début, sous la référence E0.

## Revendications

1. Système d'évaluation de la surface d'un pneumatique (10), comportant :
- une zone d'entrée (21) du pneumatique dans le système, une zone de capture, et une zone de sortie (22), distincte du point d'entrée,
- des moyens de mise en mouvement (23) et de maintien en position d'un pneumatique,
- des moyens d'éclairage du pneumatique permettant l'éclairage d'un flanc du pneumatique et du sommet d'un pneumatique dans la zone de capture,
- des moyens d'acquisition d'une image visuelle du pneumatique dans la zone de capture,
- des moyens de traitement de l'image acquise, au moins un moyen d'acquisition étant installé sur un axe mobile par rapport au pneumatique installé dans la zone de capture, et
- des moyens d'écartement des bourrelets du pneumatique, **caractérisé en ce que** lesdits moyens d'écartement des bourrelets du pneumatique comportent des galets mobiles en translation sur deux axes verticaux, les deux axes verticaux étant mobiles en translation sur un axe horizontal.

2. Système d'évaluation selon la revendication 1, dans lequel les moyens de mise en mouvement (23) et de maintien en position d'un pneumatique comprennent un ou plusieurs des moyens parmi :
- des moyens de centrage du pneumatique (20),
- des moyens de mise en rotation,
- des moyens de blocage du pneumatique,
- des moyens de mise en mouvement linéaire entre la zone d'entrée et de sortie, via la zone de capture.

3. Système d'évaluation selon l'une des revendications précédentes, dans lequel les moyens d'acquisition comportent une ou plusieurs caméras linéaires, et dans lequel les moyens d'éclairage sont disposés en dehors du champ d'acquisition de la ou des caméras.

4. Système d'évaluation selon l'une des revendications précédentes, dans lequel les moyens d'éclairage comportent des sources lumineuses individuelles recouvertes d'un matériau diffusant.

5. Système d'évaluation selon l'une des revendications précédentes, dans lequel les moyens d'éclairage d'un flanc du pneumatique comportent plusieurs lignes de sources lumineuses individuelles.

6. Système selon l'une des revendications précédentes, dans lequel les moyens de traitement de l'image acquise comportent des moyens d'intelligence artificielle.

7. Système selon l'une des revendications précédentes, comprenant des moyens de mise en position des moyens d'acquisition et/ou d'éclairage.

8. Système selon l'une des revendications précédentes, comportant un demi-miroir, installé de manière à réfléchir l'image d'une partie du pneumatique.

9. Procédé d'évaluation de la surface d'un pneumatique par un système selon l'une des revendications précédentes, le procédé comportant
- une étape d'entrée du pneumatique dans le système d'évaluation,
- une étape d'acquisition d'une image visuelle du pneumatique,
- une étape de sortie du pneumatique du système d'évaluation,
dans lequel l'étape d'acquisition d'une image visuelle du pneumatique est effectuée pendant une rotation d'un tour du pneumatique, et en ce que l'étape de sortie du pneumatique est concomitante à une étape d'entrée d'un autre pneumatique dans le système .

## Patentansprüche

1. System zur Beurteilung der Oberfläche eines Reifens (10), umfassend:
- einen Einführbereich (21) zum Einführen des Reifens in das System, einen Aufnahmebereich und einen Ausführbereich (22), der von der Einführstelle verschieden ist,
- Mittel zum Inbewegungversetzen (23) und Inpositionhalten eines Reifens,
- Mittel zum Beleuchten des Reifens, die das Beleuchten einer Seitenwand des Reifens und des Scheitels eines Reifens in dem Aufnahmebereich ermöglichen,
- Mittel zum Erfassen eines visuellen Bildes des Reifens in dem Aufnahmebereich,
- Mittel zum Verarbeiten des erfassten Bildes, wobei mindestens ein Erfassungsmittel auf einer Achse angebracht ist, die in Bezug auf den in dem Aufnahmebereich angebrachten Reifen beweglich ist, und
- Mittel zum Spreizen der Wülste des Reifens, **dadurch gekennzeichnet, dass** die Mittel zum Spreizen der Wülste des Reifens Rollen umfassen, die auf zwei vertikalen Achsen translatorisch beweglich sind, wobei die beiden vertikalen Achsen auf einer horizontalen Achse translatorisch beweglich sind.

2. System zur Beurteilung nach Anspruch 1, wobei die Mittel zum Inbewegungversetzen (23) und Inpositionhalten eines Reifens eines oder mehrere der Mittel aufweisen unter:
- Mitteln zum Zentrieren des Reifens (20),
- Mitteln zum Indrehungversetzen,
- Mitteln zum Festhalten des Reifens,
- Mitteln zum Versetzen in eine lineare Bewegung zwischen dem Einführ- und dem Ausführbereich, über den Aufnahmebereich.

3. System zur Beurteilung nach einem der vorhergehenden Ansprüche, wobei die Mittel zum Erfassen eine oder mehrere Zeilenkameras umfassen und wobei die Mittel zum Beleuchten außerhalb des Erfassungsbereichs der Kamera(s) angeordnet sind.

4. System zur Beurteilung nach einem der vorhergehenden Ansprüche, wobei die Mittel zum Beleuchten einzelne Lichtquellen umfassen, die mit einem streuenden Material bedeckt sind.

5. System zur Beurteilung nach einem der vorhergehenden Ansprüche, wobei die Mittel zum Beleuchten einer Seitenwand des Reifens mehrere Zeilen aus einzelnen Lichtquellen umfassen.

6. System nach einem der vorhergehenden Ansprüche, wobei die Mittel zum Verarbeiten des erfassten Bildes Mittel künstlicher Intelligenz umfassen.

7. System nach einem der vorhergehenden Ansprüche, das Mittel zum Inpositionbringen der Mittel zum Erfassen und/oder Beleuchten aufweist.

8. System nach einem der vorhergehenden Ansprüche, umfassend einen Halbspiegel, der so angebracht ist, dass er das Bild eines Teils des Reifens reflektiert.

9. Verfahren zur Beurteilung der Oberfläche eines Reifens durch ein System nach einem der vorhergehenden Ansprüche, das Verfahren umfassend
- einen Schritt des Einführens des Reifens in das System zur Beurteilung,
- einen Schritt des Erfassens eines visuellen Bildes des Reifens,
- einen Schritt des Ausführens des Reifens aus dem System zur Beurteilung, wobei der Schritt des Erfassens eines visuellen Bildes des Reifens während einer Drehung um eine Umdrehung des Reifens durchgeführt wird, und dadurch, dass der Schritt des Ausführens des Reifens mit einem Schritt des Einführens eines anderen Reifens in das System zusammenfällt.

## Claims

1. System for evaluating the surface of a tyre (10), comprising:
- a region (21) for entry of the tyre into the system, a capture region, and an exit region (22), distinct from the entry point,
- means for moving (23) and for holding a tyre in position,
- means for illuminating the tyre allowing the illumination of a sidewall of the tyre and of the crown of a tyre in the capture region,
- means for acquiring a visual image of the tyre in the capture region,
- means for processing the acquired image,
at least one acquisition means being installed on a shaft that is movable with respect to the tyre installed in the capture region, and
- means for spreading the beads of the tyre, **characterized in that** said means for spreading the beads of the tyre comprise rollers that are movable in translation on two vertical shafts, the two vertical shafts are movable in translation on a horizontal shaft.

2. Evaluation system according to Claim 1, wherein the means for moving (23) and holding a tyre in position comprise one or more means from among:
- means for centring the tyre (20),
- rotating means,
- means for locking the tyre,
- means for linear movement between the entry and exit regions, via the capture region.

3. Evaluation system according to one of the preceding claims, wherein the acquisition means comprise one or more linear cameras, and wherein the illuminating means are arranged outside of the field of acquisition of the one or more cameras.

4. Evaluation system according to one of the preceding claims, wherein the illuminating means comprise individual light sources covered with a diffusing material.

5. Evaluation system according to one of the preceding claims, wherein the means for illuminating a sidewall of the tyre comprise several lines of individual light sources.

6. System according to one of the preceding claims, wherein the means for processing the acquired image comprise artificial intelligence means.

7. System according to one of the preceding claims, comprising means for positioning the acquisition and/or illuminating means.

8. System according to one of the preceding claims, comprising a half-mirror, installed so as to reflect the image of part of the tyre.

9. Method for evaluating the surface of a tyre using a system according to one of the preceding claims, the method comprising
- a step of entering the tyre into the evaluation system,
- a step of acquiring a visual image of the tyre,
- a step of exiting the tyre from the evaluation system,
in which the step of acquiring a visual image of the tyre is performed while the tyre is rotated by one revolution, and in that the step of exiting the tyre is concomitant with a step of entering another tyre into the system.
